# EUROPÄISCHE PATENTANMELDUNG

(11) **EP 2 441 735 A1**
(43) Veröffentlichungstag der Anmeldung: **18.04.2012**
(21) Anmeldenummer: 11184635.8
(22) Anmeldetag: 11.10.2011
(51) Int. Cl.: C02F 1/469, C25B 13/04, C02F 1/461

(54) **Verfahren und Vorrichtung zur Abtrennung von Ionen aus Abwässern**

(30) Priorität: 14.10.2010 DE 102010042444
(71) Anmelder: Siemens Aktiengesellschaft, 80333 München (DE)
(72) Erfinder: Mielke, Jürgen, 96049 Bamberg (DE); Strätz, Klaus, 96191 Trunstadt (DE); Hahn, Alexander, 91341 Röttenbach (DE); Schwarz, Hermann, 97084 Würzburg (DE); Straub, Jochen, 91054 Erlangen (DE); Waidhas, Manfred, 90427 Nürnberg (DE)

(57) **Zusammenfassung**

Die Erfindung betrifft ein Verfahren zur Abtrennung von Ionen aus Abwässern, insbesondere aus industriellen Prozesswässern, bei dem Kationen enthaltendes Abwasser durch eine mit einer Anode (3) bestückte Elektrodenzelle, eine Anodenzelle (2), und Anionen enthaltendes Abwasser durch eine mit einer Kathode (5) bestückte Elektrodenzelle, eine Kathodenzelle (4), und eine die Ionen aufnehmende Spüllösung durch eine von der Elektrodenzelle durch wenigstens einen Separator (7) getrennte Spülkammer (15) geleitet wird, so dass aufgrund der Potentialdifferenz zwischen Kathode und Anode die in dem Abwasser enthaltenen Ionen durch den Separator hindurch in die Spüllösung diffundieren, wobei ein elektrisch nicht leitender, für Anionen und Kationen durchlässiger Separator aus einem porösen Material eingesetzt wird.

Die Erfindung betrifft außerdem eine Vorrichtung zur Abtrennung von Ionen aus Abwässern, insbesondere industriellen Prozesswässern, mit zwei Elektrodenzellen, nämlich einer eine Anode (3) enthaltenden Anodenzelle (2) und einer eine Kathode (5) enthaltenden Kathodenzelle (4), die durch wenigstens einen elektrisch nicht leitenden, für Anionen und Kationen durchlässigen Separator (7) aus einem porösen Material voneinander getrennt sind.

## Beschreibung

Die Erfindung betrifft ein Verfahren und eine Vorrichtung zur Abtrennung von Ionen aus Abwässern, insbesondere aus industriellen Prozesswässern. Bei vielen nasschemischen Verfahren der Industrie werden Einsatzchemikalien wie Säuren, Basen oder Salze eingesetzt. Beispielsweise wird in der Papier- und Zellstoffindustrie in großen Mengen Natriumhydroxid im Bleichprozess verwendet. In anderen Anwendungsfällen werden industriellen Wasserströmen Säuren oder Basen zur Einstellung eines pH-Werts zugesetzt, beispielsweise um eine Belegung nachfolgender Membranfilteranlagen mit Feststoffen zu verhindern. Einsatzchemikalien der genannten Art sind Verbrauchschemikalien die in den jeweiligen Abwässern verbleiben. Im Hinblick auf eine umweltschonende Entsorgung der Abwässer und im Hinblick auf eine Rückgewinnung der Einsatzchemikalien ist es wünschenswert, diese aus den Abwässern abzutrennen, so dass sie entweder in weniger voluminöser Form entsorgt oder einem industriellen Prozess wieder zugeführt werden können.

Aus EP 0 561 942 A1, EP 0 294 877 A1 und EP 0 195 351 A1 sind Elektrodialyseverfahren bekannt, bei denen ionenselektive Ionenaustauschermembranen zum Einsatz kommen. Diese Membranen enthalten funktionelle Gruppen, welche in der Lage sind, ein aus der Lösung zu entfernendes Ion zu binden. Aufgrund eines zwischen einer Anode und einer Kathode vorhandenen elektrischen Feldgradienten wandern die Ionen durch die Membranen hindurch und in eine Spüllösung hinein. Problem bei diesen Verfahren ist, dass sie für industrielle Abwässer, die oft einen hohen Verschmutzungsgrad und mehrere verschiedene Ionen enthalten, kaum anwendbar sind. Die bei den Verfahren eingesetzten Ionenaustauschermembranen binden nämlich auch andere als die aus dem Abwasser abzutrennenden Ionen. Dabei besteht die Gefahr, dass die Bindungsplätze der Ionenaustauschermembran mit Ionen belegt werden, die eine größere Affinität zu den funktionellen Gruppen aufweisen als die aus dem Abwasser abzutrennenden Ionen. Beispielsweise würden im Abwasser vorhandene mehrwertige Ionen wie etwa Ca²⁺, Mg²⁺ und Al³⁺ den Austausch von Na⁺ in einer Ionenaustauschermembran aufgrund ihrer höheren Ladung und der sich daraus ergebenden höheren Affinität zu den funktionellen Gruppen die Natriumionen verdrängen und deren Diffusion unterbinden.

Aufgabe der Erfindung ist es, ein Verfahren und eine Vorrichtung der eingangs genannten Art vorzuschlagen, welche sich problemlos auch bei industriellen Abwässern einsetzen lassen.

Diese Aufgabe wird durch ein Verfahren mit den Merkmalen des Anspruches 1 und durch eine Vorrichtung mit den Merkmalen des Anspruches 19 gelöst. Bei einem erfindungsgemäßen Verfahren wird Kationen enthaltendes Abwasser durch eine mit einer Anode bestückte Elektrodenzelle, eine Anodenzelle, und/oder Anionen enthaltendes Abwasser durch eine mit einer Kathode bestückte Elektrodenzelle, eine Kathodenzelle, und eine die Ionen aufnehmende Spüllösung durch eine von der Elektrodenzelle durch wenigstens einen Separator getrennte Spülkammer geleitet, so dass aufgrund der Potentialdifferenz zwischen Kathode und Anode die in dem Abwasser enthaltenen Ionen durch den Separator hindurch in die Spüllösung diffundieren, wobei ein elektrisch nicht leitender, für Anionen und Kationen durchlässiger Separator aus einem porösen Material eingesetzt wird. Im Gegensatz zu den bekannten Verfahren ist ein solcher Separator nicht ionenspezifisch, d.h. er ist aufgrund des Fehlens von Ionen bindenden funktionellen Gruppen durchlässig sowohl für Anionen als auch für Kationen. Das Verfahren bzw. eine entsprechende Vorrichtung können daher mit dem gleichen Separator zur Abtrennung einer Vielzahl verschiedener Ionen, sowohl für Kationen als auch für Anionen eingesetzt werden. Insbesondere lassen sich damit ohne die oben geschilderten Probleme Abwässer mit einer Vielzahl unterschiedlicher, vor allem unterschiedlich geladener Ionen behandeln. Ein Separator der vorgeschlagenen Art hemmt aufgrund seiner Porosität die Diffusion von Ionen und auch anderen Inhaltsstoffen, etwa organischen Substanzen. Durch entsprechende Wahl der Porengröße des Separators , werden größere Moleküle, beispielsweise organische Moleküle wie Lignine oder Huminsäuren im Falle von Abwässern aus der Papier- oder Zellstoffherstellung oder auch Ionen mit einem größeren effektiven Durchmesser im Abwasser zurückgehalten, während die abzutrennenden Ionen, auf deren effektiven Durchmesser die Porengröße des Separators abgestimmt ist, beispielsweise Natriumionen, den Separator passieren können. Bei der Diffusion von Ionen durch eine poröse Membran ist nicht der Atomradius des Ions entscheidend, sondern die Größe der das Ion umgebenden Hydrathülle. Je kleiner ein Ion ist, desto konzentrierter ist seine Ladung und desto stärker ist das umgebende elektrische Feld. Daher weist beispielsweise das Natriumion eine größere Hydrathülle und damit einen größeren effektiven Durchmesser auf als das Kaliumion. Mit einem Verfahren und einer Vorrichtung der vorgeschlagenen Art lässt sich somit bei Vorhandensein mehrerer verschiedener Ionen eine Abtrennung einzelner Ionen aus dem Abwasser erreichen.

In den Unteransprüchen sind vorteilhafte Ausgestaltungen sowohl des Verfahrens als auch der Vorrichtung angegeben. Die Erfindung wird nun unter Bezugnahme auf die beigefügten Abbildungen näher erläutert. Es zeigen:
Fig. 1 in stark schematisierter Darstellung eine aus zwei Elektrodenzellen gebildete Vorrichtung,
Fig. 2 eine Vorrichtung, bei der zwischen den Elektrodenzellen mehrere elektrodenlose Spülkammern vorhanden sind.

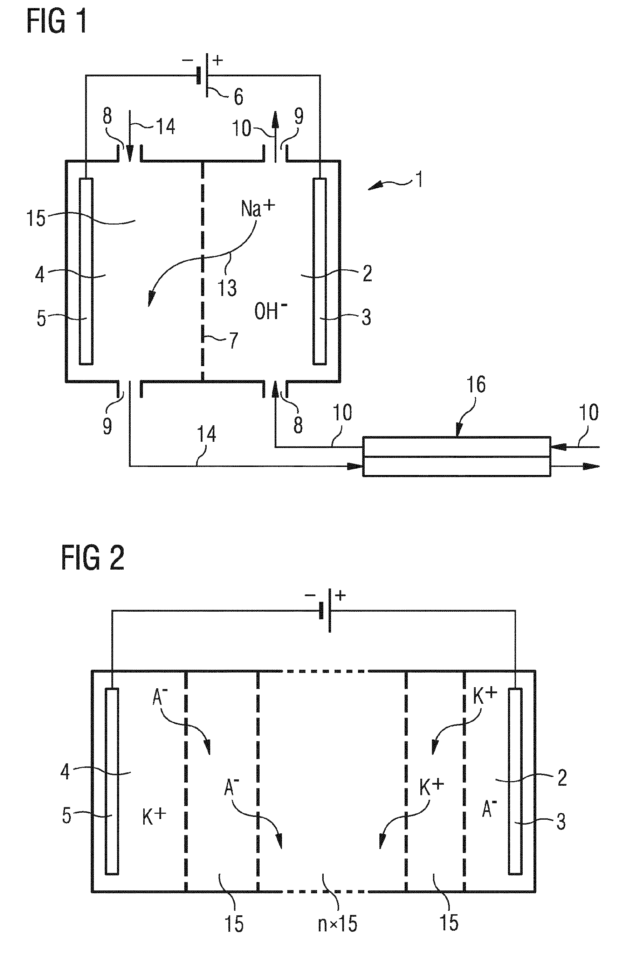

Fig. 1 zeigt die Grundform einer Vorrichtung 1 zur Abtrennung von Ionen aus Abwässern. Sie umfasst zwei Elektrodenzellen, nämlich eine Anodenzelle 2 mit einer Anode 3 und eine Kathodenzelle 4 mit einer Kathode 5. Die beiden Elektroden sind mit dem Plus- bzw. Minuspol einer Gleichspannungsquelle 6 verbunden. Die Elektrodenzellen sind durch einen in Form einer Wand oder einer Membran ausgebildeten Separator 7 voneinander getrennt. Der Separator 7 besteht vorzugsweise vollständig aus einem porösen Material wie Glas, Keramik oder Kunststoff. Die Elektrodenzellen sind jeweils mit zwei Öffnungen 8,9 versehen, durch welche eine Flüssigkeit, etwa ein von Ionen zu befreiendes Abwasser zu- bzw. abströmen kann.

Das Verfahrensprinzip wird nun anhand von Fig. 1 exemplarisch für das Entfernen von Natriumionen bzw. die Rückgewinnung von Natronlauge aus Bleichwasser für die Papier- und Zellstoffherstellung erläutert. Das als abzutrennende Ionen Kationen, also Na+ enthaltende Abwasser wird in einer Strömungsrichtung, verdeutlicht durch die Pfeile 10, durch die Anodenzelle 2 hindurch geleitet, wobei sie im Kreislauf geführt ist. Natriumionen (Na⁺) wandern aufgrund der Potentialdifferenz zwischen Anode 3 und Kathode 5 in eine von einer Spüllösung in Strömungsrichtung 14 durchströmte Spülkammer 15, die im vorliegenden Fall von der Kathodenzelle 4 gebildet ist. Der Übertritt von Natriumionen in die Spülkammer 15 ist durch den Pfeil 13 angedeutet. Die Strömungsrichtung 14 ist der Strömungsrichtung 10 des Abwassers vorzugsweise entgegen gerichtet, was die Effektivität der Ionenabtrennung aus dem Abwasser erhöht. Die Hydroxid-Ionen (OH⁻) verbleiben in der Anodenzelle bzw. im Abwasser. Die durch die im vorliegenden Fall gleichzeitig als Spülkammer 15 dienende Kathodenzelle 4 geführte Spüllösung ist ganz allgemein eine Elektrolytlösung, vorzugsweise Wasser. Die Leitfähigkeit des Abwassers sowie der Elektrolytlösung sollte im Bereich von 1 mS/cm liegen, da sonst eine relativ hohe Spannung zwischen den Elektroden erforderlich wäre. Die Hydroxid-Ionen verbleiben aufgrund ihrer negativen Ladung in der Anodenzelle 3 bzw. im Abwasser, gelangen also nicht in merklichem Ausmaß in die Spüllösung. Aufgrund der an den Elektroden anliegenden Spannung findet eine Wasserzersetzung statt, wobei in der Kathodenzelle 4 Wasserstoff gebildet wird und dabei Hydroxid-Ionen entstehen (2H₂O + 2e⁻ → H₂ + 2OH⁻). In der Kathodenzelle 4 bildet sich somit Natronlauge, die bei entsprechender Aufkonzentrierung wieder als Bleichlauge eingesetzt werden kann. In der Anodenzelle 2 bildet sich unter Verbrauch von Hydroxid-Ionen Sauerstoff (4OH⁻ → O₂ + 2H₂O + 4e⁻). Der pH-Wert des Abwassers nimmt somit im Laufe der Behandlung ab. Der pH-Wert der Spüllösung nimmt dagegen zu. Für den Fall, dass mit der Vorrichtung 1 ein zu behandelndes Abwasser eine erhöhte Temperatur aufweist, kann es zweckmäßig sein, einen Wärmetausch vorzunehmen. Dazu wird ein Wärmetauscher 16 eingesetzt, durch dessen eine Seite das Abwasser in Strömungsrichtung 10 und durch dessen andere Seite im Gegenstrom die Spüllösung geführt wird. Das Verfahren kann natürlich auch dazu benutzt werden, um Anionen aus einem Abwasser abzutrennen. Dazu wird das Abwasser in der Kathodenzelle 4 und die Spüllösung in der als Spülkammer 15 fungierenden Anodenzelle 2 behandelt. Ein Verfahren der geschilderten Art kann auch im Batchbetrieb durchgeführt werden. Wenn somit davon gesprochen wird, dass ein Abwasser oder eine Spüllösung durch eine Elektrodenzelle oder eine Spülkammer geleitet wird, so ist darunter auch zu verstehen, dass das Abwasser und die Spüllösung für eine bestimmte Zeitdauer in der Vorrichtung 1 belassen werden, ohne diese zu durchströmen.

Der Separator 7 besteht aus einem nicht leitenden porösen Material, das für Ionen, also Anionen und Kationen durchlässig ist. Er weist keine funktionellen Gruppen auf, an die Ionen binden. Würden sich in dem zu behandelnden Abwasser verschiedene Ionen befinden, so würden diese, wie oben beschrieben, in eine Spülkammer übertreten. Dies ist etwa dann zweckmäßig, wenn alle Kationen einer Ionenfracht des Abwassers abgetrennt werden sollen. Die mit Ionen angereicherte Spüllösung kann, wie oben bereits erwähnt, weiter behandelt werden, um einzelne Ionen aus dem Gemisch, etwa durch eine Fällungsreaktion, abzutrennen. Denkbar ist aber auch, die Größe der Poren des Separators so zu wählen, dass nur einzelne Ionenarten aufgrund ihres effektiven, durch die jeweilige Hydrathülle bedingten Durchmessers den Separator passieren können. Der Separator 7 kann beispielsweise für den genannten Zweck auf unterschiedliche Arten variiert werden. Die Porosität kann beispielsweise durch Verwendung eines Sintermaterials oder eines Fasermaterials gewährleistet werden. Im ersten Fall wird die Porosität dadurch erzeugt, dass mehr oder weniger große Partikel eines Materials wie Kunststoff oder Glas gesintert werden, wobei zwischen den Partikeln Ionenkanäle bildende Hohlräume entstehen. Im Falle eines Fasermaterials kann dieses nach Art eines Vlieses, eines Gestrickes, eines Gewirkes, eines Gewebes oder dergleichen ausgebildet sein. In jedem Falle kann bei der Herstellung eines solchen textilähnlichen Gebildes auch auf die Größe der zwischen den Fasern vorhandenen Poren Einfluss genommen werden. Als Material für den Separator 7 kommen beispielsweise Kunststoffmaterialien wie Phenolharz, Polytetrafluorethen, PVC, Polyolefin, Polyamid, Polyethylen und Polypropylen in Frage. Auch Glas ist ein geeignetes Material. Es lässt sich, wie erwähnt, zu einem Sintermaterial verarbeiten oder auch in Form von Glasfasern zu einem textilartigen Gewebe verarbeiten. Als Material für den Separator kommen auch keramische Materialien wie Zirkoniumoxid in Frage.

Die in den Elektrodenzellen vorhandenen Elektroden bestehen aus herkömmlichen Materialien. Als Anodenmaterial kommt platiniertes Titan, platiniertes Niob, bordotierter Diamant, Edelstahl mit einem Chrom- und Nickelanteil von jeweils > 20 Gewichtsprozent in Frage. Als Kathodenmaterial kann beispielsweise Baustahl, Edelstahl oder Kohlenstoff verwendet werden.

Insbesondere zur Steigerung der Effektivität der Reinigung des Abwassers bzw. der Abtrennung von Ionen aus diesem ist es zweckmäßig, wenn nicht nur eine Spülkammer 15 vorhanden ist, sondern eine Vielzahl solcher Kammern, wie in Fig. 2 gezeigt. Im Falle der oben geschilderten Verfahrensvariante ist dann in einer Elektrodenzelle Abwasser und in der anderen, als Spülkammer 15 dienenden Elektrodenzelle eine Spüllösung vorhanden, wobei zwischen dieser Elektrodenzelle und der jeweils anderen Elektrodenzelle wenigstens eine weitere Spülkammer vorhanden ist. Eine Vorrichtung 1 der in Fig. 2 gezeigten Art kann prinzipiell so betrieben werden wie weiter oben beschrieben, d.h. durch ein Elektrodenzelle wird ein Abwasser geleitet, das wenigstens ein abzutrennendes Kation bzw. Anion enthält, wobei durch die jeweils andere Elektrodenzelle und durch die wenigstens eine sich daran anschließende Spülkammern 15 eine Spüllösung geleitet wird.

Bei einer Verfahrensvariante ist vorgesehen, dass durch beide Elektrodenzellen Abwasser und durch wenigstens eine zwischen den Elektrodenzellen vorhandene Spülkammer eine Spüllösung geleitet wird. Auf diese Weise können beiden Kationen und Anionen gleichzeitig aus ein und demselben oder auch aus unterschiedlichen Abwässern entfernt werden. Ein beispielsweise einfach positives Kation K⁺ tritt aus der Anodenzelle 2 in eine sich daran anschließende und über einen Separator 7 abgetrennte Spülkammer 15 über und von dort aus über einen weiteren Separator in eine nächste Spülkammer usw.. Anionen A⁻ des durch die Kathodenzelle 4 geführten Abwassers treten ebenfalls durch einen Separator 7 in eine benachbarte Spülkammer 15 und von dort in weitere benachbarte Spülkammern über. Es werden somit zwei Fraktionen von Spüllösungen erhalten, wobei sich in der einen Fraktion das Anion in saurer Lösung, also beispielsweise eine Säure wie HNO₃ und in der anderen Fraktion das Kation in basischer Lösung, also eine Lauge wie NaOH anreichert.

Eine weitere Verfahrensvariante sieht vor, dass Abwasser behandelt wird, welches oxidierbare Verunreinigungen, beispielsweise Lignin und Huminsäuren im Falle von Bleichereilauge oder reduzierbare Verunreinigungen, beispielsweise Arsenate und Selenate enthält. Im erstgenannten Fall findet in der Anodenzelle 2 eine anodische Oxidation der organischen Substanzen unter Bildung von Kohlendioxid und Wasser statt. Die als Beispiel genannten reduzierbaren Substanzen Arsenate und Selenate werden an der Kathode 5 zu Arsen- bzw. Selenwasserstoff reduziert. Diese Stoffe sind gasförmig und könnten dadurch leicht aus der Spüllösung entfernt werden. Diese Gase müssen zwar ebenfalls einer Entsorgung zugeführt werden. Sie sind aber in der Spüllösung abgereichert oder überhaupt nicht mehr vorhanden, so dass sie spätere Nachbehandlungsschritte nicht oder zumindest in geringerem Ausmaße beeinflussen können.

Bei einem Laborversuch, dessen Ergebnis die untenstehende Tabelle wiedergibt wurde eine Menge von zwei Litern Bleichereiabwasser aus der Zellstoffgewinnung im Labormaßstab bei Raumtemperatur behandelt. Es kam eine Vorrichtung etwa entsprechend Fig. 1 zum Einsatz, wobei das Abwasser in der Anodenzelle 4 belassen, also nicht durch diese im Kreislauf hindurch gepumpt wurde. Es wurde eine Mischmetalloxid-Anode und eine Kathode aus VA-Stahl verwendet. Die Stromdichte betrug 20 mA/cm². Als Separator 7 wurde ein einer Glasfritte entsprechendes Glassintermaterial verwendet. Das Bleichereiabwasser enthielt in üblicherweise Huminsäuren, Lignin und jeweils Molekülfragmente davon, und hatte einen CSB-Wert von 10700. Nach einer halben Stunde und einer Stunde wurden jeweils der CSB-Wert, die Natriumkonzentration der pH-Wert und die Leitfähigkeit des Abwassers und der Spüllösung (Wasser mit geringer Menge an KOH als Elektrolyt). Aus der Tabelle ist erkennbar, dass der Gehalt an Natriumionen in dem Abwasser innerhalb einer Stunde von anfangs 2300 mg/l auf 134 mg/l sank. Die Zunahme der Natriumionenkonzentration in der Spüllösung entspricht nur deshalb nicht der Abnahme der Konzentration im Abwasser, weil aufgrund von Osmose und wegen der Hydrathülle der Natriumionen die Wassermenge der Spüllösung zunimmt. Aus dem gleichen Grund ergibt sich eine geringe Erhöhung des CSB-Wertes im Abwasser. Die Leitfähigkeit der Spüllösung nahm aufgrund der eindiffundierten Natriumionen zu, der pH-Wert wegen der Bildung von Hydroxidionen an der Kathode zu. Ein Übertritt von organischen Substanzen in die Spüllösung fand nur in unerheblichem Ausmaß statt. Dabei ist zu berücksichtigen, dass das als Separator verwendete Material relativ großporig war.

| | | Start | 0,5 Std. | 1 Std. |
|---|---|---|---|---|
| CSB [mg/l] | + | 10700 | 11300 | 12900 |
| | - | < 15 | 45 | 118 |
| NA⁺ [mg/l] | + | 2300 | 1220 | 134 |
| | - | 3,1 | 640 | 1480 |
| pH | + | 10,5 | 4,5 | 2 |
| | - | 12 | 12,5 | 13 |
| σ [mS/cm] | + | 7,4 | 4,2 | 2,6 |
| | - | 5,0 | 11,0 | 18,3 |

## Patentansprüche

1. Verfahren zur Abtrennung von Ionen aus Abwässern, insbesondere aus industriellen Prozesswässern, bei dem Kationen enthaltendes Abwasser durch eine mit einer Anode (3) bestückte Elektrodenzelle, eine Anodenzelle (2), und Anionen enthaltendes Abwasser durch eine mit einer Kathode (5) bestückte Elektrodenzelle, eine Kathodenzelle (4), und eine die Ionen aufnehmende Spüllösung durch eine von der Elektrodenzelle durch wenigstens einen Separator (7) getrennte Spülkammer (15) geleitet wird, so dass aufgrund der Potentialdifferenz zwischen Kathode und Anode die in dem Abwasser enthaltenen Ionen durch den Separator hindurch in die Spüllösung diffundieren, wobei ein elektrisch nicht leitender, für Anionen und Kationen durchlässiger Separator aus einem porösen Material eingesetzt wird.

2. Verfahren nach Anspruch 1, bei dem ein zumindest teilweise aus einem Sintermaterial bestehender Separator (7) verwendet wird.

3. Verfahren nach Anspruch 1, bei dem ein zumindest teilweise aus einem Fasermaterial bestehender Separator (7) verwendet wird.

4. Verfahren nach einem der vorhergehenden Ansprüche, bei dem ein zumindest teilweise aus einem Keramikmaterial bestehender Separator (7) verwendet wird.

5. Verfahren nach einem der Ansprüche 1 bis 3, bei dem ein zumindest teilweise aus einem Kunststoffmaterial bestehender Separator (7) verwendet wird.

6. Verfahren nach Anspruch 5, bei dem ein Separator (7) verwendet wird, dessen Kunststoffmaterial wenigstens einen Kunststoff aus der Gruppe Phenolharz, Polytetrafluorethen, PVC, Polyolefin, Polyamid, Polyethylen und Polypropylen enthält.

7. Verfahren nach einem der Ansprüche 1 bis 3, bei dem ein aus Glas bestehender Separator (7) verwendet wird.

8. Verfahren nach einem der vorhergehenden Ansprüche, bei dem eine Anode (3) mit wenigstens einem Material aus der Gruppe platiniertes Titan, platiniertes Niob, bordotierter Diamant, Edelstahl mit einem Chrom- und einem Nickelgehalt von jeweils > 20 Gewichtsprozent verwendet wird.

9. Verfahren nach einem der vorhergehenden Ansprüche, bei dem eine Kathode (5) aus wenigstens einem Material aus der Gruppe Baustahl, Edelstahl, Kohlenstoff verwendet wird.

10. Verfahren nach einem der vorhergehenden Ansprüche, bei dem das Abwasser durch eine der beiden Elektrodenzellen geleitet wird, wobei die jeweils andere Elektrodenzelle als Spülkammer (15) dient und mit Spüllösung beschickt wird.

11. Verfahren nach Anspruch 10, bei dem die Spüllösung durch wenigstens eine weitere Spülkammer geleitet wird, die zwischen der mit Abwasser beschickten Elektrodenzelle und der mit Spüllösung beschickten Elektrodenzelle angeordnet ist und durch einen Separator (7) von einer benachbarten Spülkammer (15) oder Elektrodenzelle getrennt ist.

12. Verfahren nach einem der Ansprüche 1 bis 9, bei dem Abwasser durch beide Elektrodenzellen und die Spüllösung durch wenigstens eine zwischen den Elektrodenzellen vorhandene Spülkammer (15) geleitet wird, die durch einen Separator (7) von einer benachbarten Elektrodenzelle oder Spülkammer (15) getrennt ist.

13. Verfahren nach einem der vorhergehenden Ansprüche, mit dem ein Abwasser behandelt wird, welches als rückzugewinnende Ionen Kationen und oxidierbare Verunreinigungen enthält.

14. Verfahren nach Anspruch 13, mit dem ein organische Verunreinigungen enthaltendes Abwasser behandelt wird.

15. Verfahren nach Anspruch 14, mit dem ein Natronlauge enthaltendes Bleichereiabwasser behandelt wird.

16. Verfahren nach einem der vorhergehenden Ansprüche, mit dem ein Abwasser behandelt wird, welches als rückzugewinnende Ionen Kationen und reduzierbare Verunreinigungen enthält.

17. Verfahren nach einem der vorhergehenden Ansprüche, bei dem eine Elektrodenzelle und eine Spülkammer im Gegenstrom mit Abwasser bzw. Spüllösung beschickt werden.

18. Verfahren nach einem der vorhergehenden Ansprüche, bei dem ein Wärmetausch zwischen Abwasser und Spüllösung vorgenommen wird.

19. Vorrichtung zur Abtrennung von Ionen aus Abwässern, insbesondere industriellen Prozesswässern, mit zwei Elektrodenzellen, nämlich einer eine Anode (3) enthaltenden Anodenzelle (2) und einer eine Kathode (5) enthaltenden Kathodenzelle (4), die durch wenigstens einen elektrisch nicht leitenden, für Anionen und Kationen durchlässigen Separator (7) aus einem porösen Material voneinander getrennt sind.

20. Vorrichtung nach Anspruch 19, mit einem zumindest teilweise aus Sintermaterial bestehenden Separator (7).

21. Vorrichtung nach Anspruch 19, mit einem zumindest teilweise aus Fasermaterial bestehenden Separator (7).

22. Vorrichtung nach Anspruch 19, 20 oder 21, mit einem zumindest teilweise aus Keramikmaterial bestehenden Separator (7).

23. Vorrichtung nach einem der Ansprüche 19 bis 22, mit einem zumindest teilweise aus einem Kunststoffmaterial bestehenden Separator (7).

24. Vorrichtung nach Anspruch 23, mit einem Separator (7), dessen Kunststoffmaterial wenigstens ein Kunststoff aus der Gruppe Phenolharz, Polytetrafluorethen, PVC, Polyolefin, Polyamid, Polyethylen und Polypropylen ist.

25. Vorrichtung nach Anspruch 19, 20 oder 21, bei dem ein zumindest teilweise aus Glas bestehender Separator (7) verwendet wird.

26. Vorrichtung nach einem der Ansprüche 19 bis 25, mit einer Anode (3) aus wenigstens einem Material der Gruppe platiniertes Titan, platiniertes Niob, bordotierter Diamant, Edelstahl mit einem Chrom- und einem Nickelgehalt von jeweils > 20 Gewichtsprozent.

27. Vorrichtung nach einem der Ansprüche 19 bis 26, mit einer Kathode (5) aus wenigstens einem Material aus der Gruppe Baustahl, Edelstahl, Kohlenstoff.
